(19) Europäisches Patentamt / European Patent Office / Office européen des brevets

(11) **EP 3 971 766 A1**

(12) **EUROPEAN PATENT APPLICATION**
published in accordance with Art. 153(4) EPC

(43) Date of publication:
**23.03.2022 Bulletin 2022/12**

(21) Application number: **19929355.6**

(22) Date of filing: **25.09.2019**

(51) Int Cl.:
**G06K 9/00** (2022.01)

(86) International application number:
**PCT/CN2019/107857**

(87) International publication number:
**WO 2020/232941 (26.11.2020 Gazette 2020/48)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **17.05.2019 CN 201910414096**

(71) Applicant: **FJ Dynamics Technology Co., Ltd**
**Xiangyang, Hubei 441100 (CN)**

(72) Inventors:
• **WU, Di**
**Xiangyang, Hubei 441100 (CN)**
• **LIAN, Bobo**
**Xiangyang, Hubei 441100 (CN)**
• **WU, Chenjian**
**Xiangyang, Hubei 441100 (CN)**
• **CHEN, Minxin**
**Xiangyang, Hubei 441100 (CN)**
• **CHEN, Hong**
**Xiangyang, Hubei 441100 (CN)**

(74) Representative: **Zaboliene, Reda**
**Metida**
**Business center Vertas**
**Gyneju str. 16**
**01109 Vilnius (LT)**

(54) **DAIRY CATTLE NIPPLE DETECTION CONVOLUTIONAL NEURAL NETWORK MODEL AND CONSTRUCTION METHOD THEREFOR**

(57) Disclosed is a method for constructing a dairy cattle nipple detection convolutional neural network model. The construction method comprises the following steps: acquiring at least one dairy cattle image of at least one dairy cattle, the dairy cattle image comprising dairy cattle nipples; acquiring a labeled image corresponding to each dairy cattle image, the labeled image having at least one target frame, and the target frame being used for labeling the positions of the dairy cattle nipples in the dairy cattle image; dividing the dairy cattle image and the corresponding labeled image into a training set, a verification set and a test set according to pre-set proportions; constructing a dairy cattle nipple detection convolutional neural network model on the basis of the dairy cattle image and the corresponding labeled image in the training set; and optimizing and testing dairy cattle nipple detection convolutional neural network model parameters on the basis of the dairy cattle image and the corresponding labeled image in the verification set and the test set.

Acquire at least one dairy cattle image of at least one dairy cattle, wherein the dairy cattle image includes dairy cattle nipples — 101

Acquire a labeled image corresponding to each dairy cattle image, wherein the labeled image includes at least one target frame, and the target frame is used to label the position of the dairy cattle nipple in the dairy cattle image — 102

Divide the dairy cattle images and the corresponding labeled images into a training set, a verification set, and a test set according to preset proportions — 103

Construct a dairy cattle nipple detection convolutional neural network model based on the dairy cattle images and the corresponding labeled images in the training set — 104

Optimize and test parameters of the dairy cattle nipple detection convolutional neural network model based on the dairy cattle images and the corresponding labeled images in the verification set and the test set — 105

**FIG. 1**

EP 3 971 766 A1

## Description

FIELD

The present disclosure relates to computer field, and particular relate to a dairy cattle nipple detection convolutional neural network model, a construction method and a construction system for constructing the same.

BACKGROUND

With the development of science and technology, the development of automation in agriculture and animal husbandry has increasingly become a current demand. The development of automation can reduce a lot of manpower and time costs, and can facilitate human management, such as automatic spraying of pesticides on farms, automatic feeding devices for pasture, etc. Among lots of production labors in animal husbandry, milking for dairy cattle has always been a job with high labor intensity and higher requirements for operators. At present, automatic milking devices have been designed, but these devices still require manual operation, complicated operation, and such that the work efficiency is low.

It should be understood by those skilled in the art that, in order to realize the complete automation of a process of milking for dairy cattle, the detection and positioning of dairy cattle nipples are a very critical step. The accuracy of detection and positioning of the dairy cattle nipples is directly related to the accuracy and effect of the process of milking. In order to achieve a detection of an object, traditional methods need to design different feature extraction methods and classification algorithms for the object, which can be mainly expressed as: region selection-feature extraction-classifier. The region selection usually uses an exhaustive strategy, sliding windows, by setting different sizes, and traversing an image with different aspect ratios. Such that the time complexity is high. Secondly, due to the feature extraction is artificially designed, diverse shapes, and diverse light changes, and diverse backgrounds, the robustness is poor.

With the development of convolutional neural network architecture, deep learning based on target detection and recognition has become the mainstream method. One type contains suggestions for object boundary regions, such as R-CNN, Fast R-CNN, Faster R-CNN and other models. These models use the enumeration method to presuppose target candidate area, gradually fine-tune and optimize target position, and finally realize classification and recognition. However, the detection speed of this method is slow. Another type is to directly generate boundary regions, such as One-stage detection models e.g., YOLO and SSD. These models can simultaneously predict the boundary and classify and recognize the target. The detection speed has been significantly improved, but there are problems with low detection accuracy such as missed detection. On the other hand, the deep learning framework needs to learn too many parameters, the calculation speed is relatively slow, and over-fitting may occur. Therefore, there are a lot of room for improving in target detection.

SUMMARY

A purpose of the present disclosure provides a dairy cattle nipple detection convolutional neural network model, a construction method and a construction system for constructing the same, the dairy cattle nipple detection convolutional neural network model is applied to a field for dairy cattle nipples detection, to improve a detection accuracy of detecting dairy cattle nipples.

Another purpose of the present disclosure provides a dairy cattle nipple detection convolutional neural network model, a construction method and a construction system for constructing the same, the dairy cattle nipple detection convolutional neural network model detecting cattle nipples has a high detection accuracy.

Another purpose of the present disclosure provides a dairy cattle nipple detection convolutional neural network model, a construction method and a construction system for constructing the same, the dairy cattle nipple detection convolutional neural network model has a high detection accuracy for recognizing input images, a good robustness to the recognition of dairy cattle nipples and a strong learning ability.

Another purpose of the present disclosure provides a dairy cattle nipple detection convolutional neural network model, a construction method and a construction system for constructing the same, the dairy cattle nipple detection convolutional neural network model using a ResNet50 parameter file trained by the ImageNet training model can speed up the convergence speed of the model and improve the efficiency of dairy cattle nipple detection.

Another purpose of the present disclosure provides a dairy cattle nipple detection convolutional neural network model, a construction method and a construction system for constructing the same, the dairy cattle nipple detection convolutional neural network model can improve the detection efficiency by merging the parameters of the BatchNorm layer into the convolutional layer.

Another purpose of the present disclosure provides a dairy cattle nipple detection convolutional neural network model, a construction method and a construction system for constructing the same, the dairy cattle nipple detection convolutional neural network model can improve the detection efficiency by introducing a screening mechanism to remove the detection frames that do not meet preset conditions.

Another purpose of the present disclosure provides a dairy cattle nipple detection convolutional neural network model, a construction method and a construction system for constructing the same, the dairy cattle nipple detection convolutional neural network model has a high precision in the dairy cattle nipple detection and it is convenient to use.

Correspondingly, in order to achieve at least one of the above purposes, the present disclosure provides a method for constructing a dairy cattle nipple detection convolutional neural network model, which includes:

101: acquiring at least one dairy cattle image of at least one dairy cattle, the dairy cattle image comprising dairy cattle nipples;

102: acquiring a labeled image corresponding to each dairy cattle image, the labeled image comprising at least one target frame, and the target frame being used to labelling a position of the dairy cattle nipple in the dairy cattle image;

103: dividing the dairy cattle images and the corresponding labeled images into a training set, a verification set, and a test set according to pre-set proportions;

104: constructing the dairy cattle nipple detection convolutional neural network model based on the dairy cattle images and the corresponding labeled images in the training set; and

105: optimizing and testing parameters of the dairy cattle nipple detection convolutional neural network model based on the dairy cattle images and the corresponding labeled images in the verification set and the test set.

In some embodiments of the present disclosure, wherein in the step 103, the dairy cattle images and the corresponding labeled images are divided into the training set, the verification set, and the test set at a proportions of 8:1:1.

In some embodiments of the present disclosure, wherein between the step 102 and the step 103, further comprises:

increasing a diversity of the dairy cattle images and the corresponding labeled images by performing amplification processing on the dairy cattle images and the corresponding labeled images.

In some embodiments of the present disclosure, wherein between the step 103 and said step 104, further comprising:

adjusting a size of the target frame to a preset size based on the labeled image.

In some embodiments of the present disclosure, comprising:

adjusting the size of the target frame to the preset size target frame using a K-means clustering algorithm.

In some embodiments of the present disclosure, wherein in step 105, comprises:

merging parameters of a BatchNorm layer into a convolutional layer when optimizing and testing the parameters of the dairy cattle nipple detection convolutional neural network model.

In some embodiments of the present disclosure, further comprising:

removing a detection frame that does not meet a preset condition.

In some embodiments of the present disclosure, further comprising:

removing a detection frame that does not meet a preset condition.

In some embodiments of the present disclosure, further comprising:

removing a detection frame that does not meet a preset condition.

In some embodiments of the present disclosure, further comprising:

removing a detection frame that does not meet a preset condition.

In some embodiments of the present disclosure, further comprising:

removing a detection frame that does not meet a preset condition.

Another purpose of the present disclosure provides a dairy cattle nipple detection convolutional neural network model, which is used to detect a position of a dairy cattle nipple in an image, characterized in that the dairy cattle nipple detection convolutional neural network model comprises:

a dairy cattle image acquisition unit for acquiring at least one dairy cattle image of at least one dairy cattle, the dairy cattle image comprising dairy cattle nipples;

a labeled image acquisition unit for acquiring a labeled image corresponding to each dairy cattle image, the labeled image comprising at least one target frame, and the target frame being used to labelling a position of the dairy cattle nipple in the dairy cattle image;

an image dividing unit for dividing the dairy cattle images and the corresponding labeled images into a training set, a verification set, and a test set according to pre-set proportions;

a network model construction unit for constructing the dairy cattle nipple detection convolutional neural network model based on the dairy cattle images and the corresponding labeled images in the training set; and

a network model optimization unit for optimizing and testing parameters of the dairy cattle nipple detection convolutional neural network model based on the dairy cattle images and the corresponding labeled images in the verification set and the test set.

In some embodiments of the present disclosure, wherein the image dividing unit is configured to divide the dairy cattle images and the corresponding labeled images into the training set, the verification set, and the test set at a proportions of 8:1:1.

In some embodiments of the present disclosure, further comprising an image amplification unit for increasing a diversity of the dairy cattle images and the corresponding labeled images by performing amplification processing on the dairy cattle images and the corresponding labeled images.

In some embodiments of the present disclosure, further comprising a target frame adjustment unit, the target frame adjustment unit being configured for adjusting a size of the target frame to a preset size based on the labeled image.

In some embodiments of the present disclosure, further comprising: a screening unit being used to remove a detection frame that does not meet a preset condition.

Another purpose of the present disclosure provides a dairy cattle nipple detection convolutional neural network model, which is used to detect a position of a dairy cattle nipple in a dairy cattle image, characterized in that a construction method comprising following steps:

101: acquiring at least one dairy cattle image of at least one dairy cattle, the dairy cattle image comprising dairy cattle nipples;
102: acquiring a labeled image corresponding to each dairy cattle image, the labeled image comprising at least one target frame, and the target frame being used to labelling a position of the dairy cattle nipple in the dairy cattle image;
103: dividing the dairy cattle images and the corresponding labeled images into a training set, a verification set, and a test set according to pre-set proportions;
104: constructing the dairy cattle nipple detection convolutional neural network model based on the dairy cattle images and the corresponding labeled images in the training set; and
105: optimizing and testing parameters of the dairy cattle nipple detection convolutional neural network model based on the dairy cattle images and the corresponding labeled images in the verification set and the test set.

Another purpose of the present disclosure provides a dairy cattle nipple detection method, characterized in that the detection method comprise following steps:

201: acquiring an actual image of an actual dairy cattle; and
202: detecting a position of the dairy cattle nipple in the actual image using a dairy cattle nipple detection convolutional neural network model;
wherein a method for constructing the dairy cattle nipple detection convolutional neural network model comprises:

101: acquiring at least one dairy cattle image of at least one dairy cattle, the dairy cattle image comprising dairy cattle nipples;
102: acquiring a labeled image corresponding to each dairy cattle image, the labeled image comprising at least one target frame, and the target frame being used to labelling a position of the dairy cattle nipple in the dairy cattle image;
103: dividing the dairy cattle images and the corresponding labeled images into a training set, a verification set, and a test set according to pre-set proportions;
104: constructing the dairy cattle nipple detection convolutional neural network model based on the dairy cattle images and the corresponding labeled images in the training set; and
105: optimizing and testing parameters of the dairy cattle nipple detection convolutional neural network model based on the dairy cattle images and the corresponding labeled images in the verification set and the test set.

BRIEF DESCRIPTION OF THE DRAWINGS

FIG. 1 is a schematic block diagram of a method for constructing a dairy cattle nipple detection convolutional neural network model according to a preferred embodiment of the present disclosure.
FIG. 2 is a schematic flow chart of a method for constructing a dairy cattle nipple detection convolutional neural network model according to a preferred embodiment of the present disclosure.
FIG. 3 is a schematic diagram of a network architecture structure of a dairy cattle nipple detection convolutional neural network model according to a preferred embodiment of the present disclosure.
FIG. 4 is a schematic diagram of a screening mechanism of the dairy cattle nipple detection convolutional neural network model according to a preferred embodiment of the present disclosure.

FIG. 5 is a loss curve diagram of a network training of the dairy cattle nipple detection convolutional neural network model according to a preferred embodiment of the present disclosure.

FIG. 6 is a PR diagram of a network test result of the dairy cattle nipple detection convolutional neural network model according to a preferred embodiment of the present disclosure.

FIG. 7 is a schematic diagram of an application structure of the dairy cattle nipple detection convolutional neural network model according to a preferred embodiment of the present disclosure.

FIG. 8 is a schematic block diagram of a method for constructing a dairy cattle nipple detection convolutional neural network model according to a second preferred embodiment of the present disclosure.

FIG. 9 is a schematic diagram of an overall block diagram structure of a dairy cattle nipple detection convolutional neural network model constructing system according to a preferred embodiment of the present disclosure.

FIG. 10 is a schematic block diagram of a method for detecting dairy cattle nipples according to a preferred embodiment of the present disclosure.

## DETAILED DESCRIPTION

The following description is used to disclose the present disclosure so that those skilled in the art can implement the present disclosure. The preferred embodiments in the following description are only examples, and those skilled in the art can think of other obvious variations. The basic principles of the present disclosure defined in the following description can be applied to other embodiments, modifications, improvements, equivalents, and other technical solutions that do not deviate from the spirit and scope of the present disclosure.

Those skilled in the art should understand that, in the present disclosure, an orientation or a positional relationship indicated by the terms "longitudinal", "lateral", "upper", "lower", "front", "rear", "left", "right", "vertical", "horizontal", "top", "bottom", "inner", "outer", etc. is based on the orientation or the positional relationship shown in the drawings, which is only for the convenience of describing the present disclosure and simplifying the description, rather than indicating or implying that a device or an element must have a specific orientation, and is constructed and operated in a specific orientation, so the above terms should not be understood as a limitation of the present disclosure.

It can be understood that the term "a" should be understood as "at least one" or "one or more", that is, in one embodiment, the quantity of element may be one, and in another embodiment, the quantity of element can be more than one, and the term "one" cannot be understood as a restriction on the quantity.

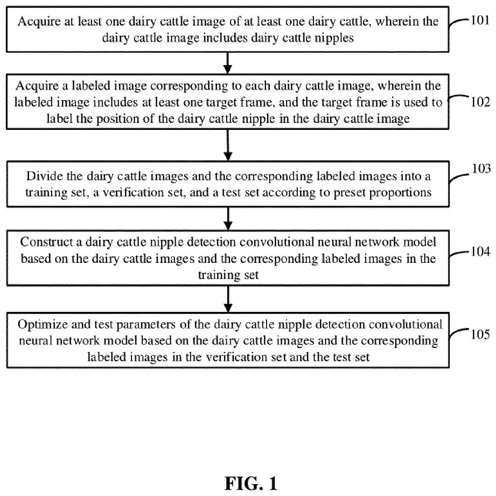

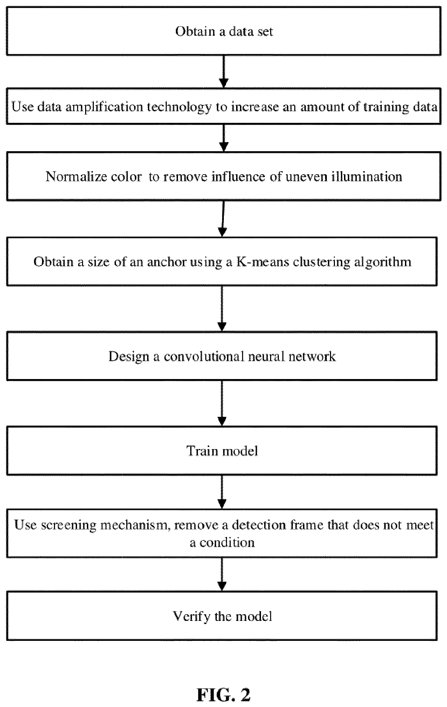

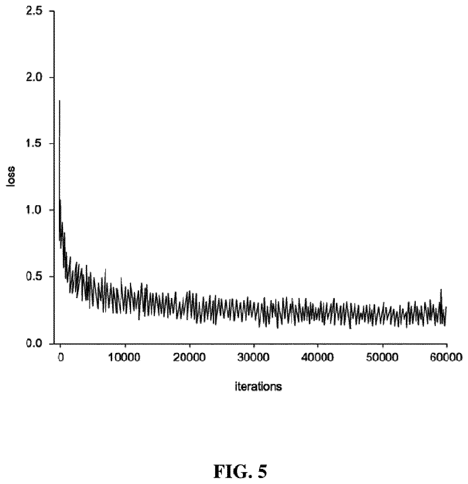

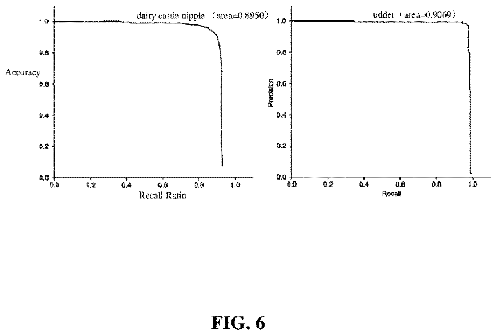

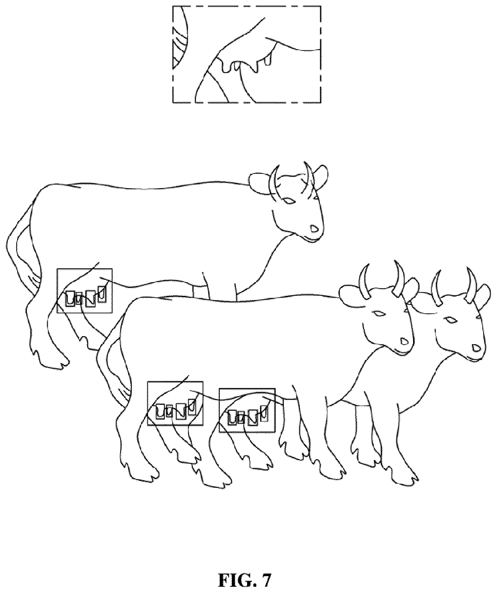

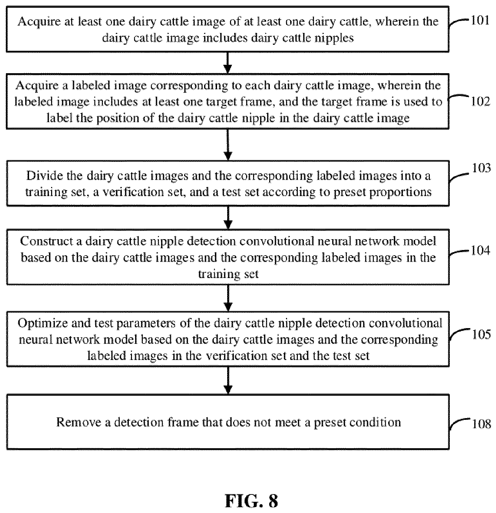

Referring to FIG. 1 to FIG. 8, a construction method 100 for constructing a dairy cattle nipple detection convolutional neural network model provided by the present disclosure is described, which includes:

101: Acquiring at least one dairy cattle image of at least one dairy cattle, the dairy cattle image includes dairy cattle nipples;

102: Acquiring a labeled image corresponding to each dairy cattle image, the labeled image includes at least one target frame, and the target frame is used to labelling a position of the dairy cattle nipple in the dairy cattle image;

103: Dividing the dairy cattle images and the corresponding labeled images into a training set, a verification set, and a test set according to pre-set proportions;

104: Constructing a dairy cattle nipple detection convolutional neural network model based on the dairy cattle images and the corresponding labeled images in the training set; and

105: Optimizing and testing parameters of the dairy cattle nipple detection convolutional neural network model based on the dairy cattle images and the corresponding labeled images in the verification set and the test set.

Wherein, in the step 101, when the dairy cattle images of the dairy cattle is taken, an industrial camera can be used to separately acquire a plurality of dairy cattle images of the dairy cattle from different angles. Preferably, the plurality of dairy cattle images of the dairy cattle are taken from four directions, i.e., front, back, left, and right in relation to the dairy cattle. Preferably, a number of dairy cattles is 100, and the dairy cattle images of the 100 dairy cattles are obtained respectively to increase a diversity of the samples.

It should be pointed out that after the dairy cattle images are acquired, the dairy cattle image that does not meet a preset condition, such as over-exposure, blurring, and target occlusion, is removed, so as to improve an accuracy of the dairy cattle images and improve an accuracy of the dairy cattle nipple detection convolutional neural network model.

In the step 102, after removing the images that do not meet the preset condition, a labeling tool can be used to label remaining dairy cattle images, and create a corresponding target frame and create categories for each dairy cattle image. The target frame is used to label a position of the dairy cattle nipple in the dairy cattle image, and the categories mainly include scene background, dairy cattle udder and dairy cattle nipples, and the dairy cattle image that has been labeled is saved in an xml file.

In the step 103, the dairy cattle images and the corresponding labeled images are divided into the training set, the verification set, and the test set according to the pre-set proportions. Preferably, in this preferred embodiment, the dairy cattle images and the corresponding labeled images are randomly divided into the training set, the verification set, and the test set at a proportions of 8:1:1, and a corresponding txt file is generated, and image name is saved in the txt file. The dairy cattle images, the xml file and the txt file are respectively saved in a folder corresponding to a Pascal_VOC data set, and a data set of dairy cattles in a Pascal_VOC format is generated.

Further, in other preferred embodiments of the present disclosure, step 106 is further included between the step 102 and the step 103: performing amplification processing on the dairy cattle images and the corresponding labeled images to increase the diversity of the dairy cattle images and the corresponding labeled images. Those skilled in the art should understand that, due to the limitation of a number of the dairy cattle images that have been acquired, it is not enough to meet a large data requirements of deep learning. Data amplification technology can be used to increase the diversity of the dairy cattle images and the corresponding labeled images such as rotation, translation, and folding, etc, and calculating a mean value of the data set, normalizing the color of the data to removing the influence of uneven illumination. After the amplification process is performed, the dairy cattle images and the corresponding labeled images are divided into the training set, the verification set, and the test set according to the pre-set proportions. Those skilled in the art should understand that, in other preferred embodiments of the present disclosure, when the number of acquired dairy cattle images is large enough to meet the requirements of the large amount of data required for deep learning, the amplification processing is not necessary on the dairy cattle images and the corresponding labeled images.

Further, step 107 can be further included between the step 103 and the step 104: adjusting a size of the target frame to a preset size based on the labeled image. Those skilled in the art should understand that due to the particularity of the dairy cattle image and the corresponding labeled image provided by the present disclosure, the size of the dairy cattle image and the size of the corresponding labeled image need to be adjusted according to actual needs. Specifically, in this preferred embodiment, a K-means clustering algorithm can be used to adjust the size of the target frame, and each training sample is assigned to a cluster where a nearest center point is located, 9 anchors and 15 anchors are respectively generated by calculating a distance d between each sample and a cluster center, the calculation formula of d is: d(box, centroid) = 1 - IOU(box, centroid), and the calculation formula of IOU is: IOU = (box $\cap$ centroid)/ (box $\cup$ centroid).

With reference to the drawings, in the step 104, a convolutional neural network is constructed based on the dairy cattle images and the corresponding labelled images in the training set. Networks used here include FasterRCNN and RFCN, and resnet50 is used as a feature extraction network, in which a last fully connected layer is removed. The feature extraction network is a residual convolution structure for extracting image feature information, and then detecting targets by connecting to an RPN network. The size and number of anchors in the network layer are modified according to the size of the target frame determined in step 107, so as to improve the detection accuracy in relation to small targets. Then, the dairy cattle images and the corresponding labeled images in the training set are input into the convolutional neural network, so as to construct the dairy cattle nipple detection convolutional neural network model. Specifically, an image resolution of each image input in the convolutional neural network is 720*1280, a parameter file of the resnet50 trained by ImageNet model is downloaded at the same time, a caffe framework is used for training, learning parameters are adjusted according to training results, and finally parameters of the model that meets conditions are obtained.

In the step 105, using the dairy cattle images and the corresponding labeled images in the verification set to optimize parameters of the dairy cattle nipple detection convolutional neural network model, and using the dairy cattle images and the corresponding labeled images in the test set to test the dairy cattle nipple detection convolutional neural network, so as to determine a detection result of the dairy cattle nipple detection convolutional neural network model. In a preferred embodiment of the present disclosure, a result of testing a detection result of the dairy cattle nipple detection convolutional neural network model by using the dairy cattle images and the corresponding labeled images in the test set includes MAP = 0.9046, FPS=12.

In other preferred embodiments of the present disclosure, in the step 102, when acquiring the labelled image corresponding to each dairy cattle image by using a labeling tool to label each dairy cattle image, labelling data can be in two types, namely scene background and dairy cattle nipples, a main target is the dairy cattle nipples, so as to reduce a workload of labeling using the labelling tool and increase a speed of labeling the dairy cattle nipple.

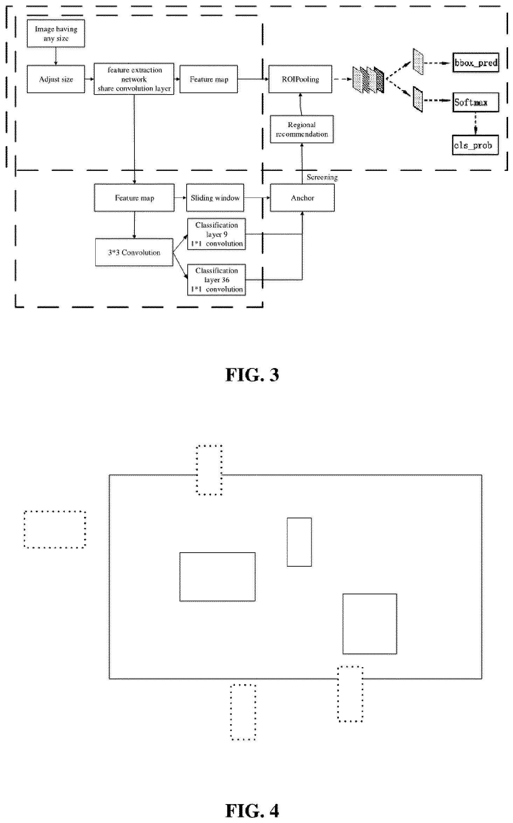

In a second preferred embodiment of the method for constructing the dairy cattle nipple detection convolutional neural network model provided by the present disclosure, the method further includes step 108: removing a detection frame that does not meet a preset condition. Those skilled in the art should understand that a detection of a large target is easier than a detection of a small target. In order to avoid false detection of the small target and further improve detection accuracy, the detection frame that intuitively does not meet the preset condition is removed. Referring to FIG. 4, the detection frame indicated by dashed line is obviously not within the target frame, and the detection frame indicated by the solid line is within the target frame, so the detection frame indicated by the dashed line is removed, the detection frame indicated by the solid line is retained, and finally the network outputs different categories and corresponding confidences and position information, and obtains a result according to set threshold.

In a third preferred embodiment of the method for constructing the dairy cattle nipple detection convolutional neural network model provided by the present disclosure, in a preferred embodiment, in the step 105, optimizing and testing the parameters of the dairy cattle nipple detection convolutional neural network model based on the dairy cattle images and the corresponding labeled images in the verification set and the test set, processing the parameters of the dairy cattle nipple detection convolutional neural network model, and merging parameters of the BatchNorm layer into the convolutional layer, so as to improving a prediction speed of the dairy cattle nipple detection convolutional neural network model. Specifically, operation in the convolutional layer includes: W*X+B, where W represents a convolution weight and B represents a convolution deviation. In the BN layer, $\mu \leftarrow \frac{1}{m}\sum_{i=1}^{m} x_i$, $\sigma^2 \leftarrow \frac{1}{m}\sum_{i-1}^{m}(x_i - \mu)^2$, $x\hat{}\_i \leftarrow$ $(x\_i - \mu)/\sqrt{(\sigma\hat{}2 + \varepsilon)}$, $\gamma\_i \leftarrow \gamma x\hat{}\_i + \beta$, $\mu$ represents a mean value in the BN layer, $\sigma$ represents a variance, $\gamma$ represents a scaling factor, $\beta$ represents a deviation, $\epsilon$ represents a non-zero value, and $\epsilon$ is used to prevent a denominator from being zero when $\sigma$ is zero. After the BN layer and the convolutional layer are merged, $\alpha=\gamma/\sqrt{(\sigma\hat{}2+\epsilon)}$, Wmerged = W $\times \alpha$ Bmerged = B $\times \alpha + (\beta - \mu \times \alpha)$.

Refer to Table 1 below, which shows a comparison of effects before and after merging the BN layer into the convolutional layer. It can be seen through experiments that after merging the BN layer into the convolutional layer, the detection speed of the dairy cattle nipple detection convolutional neural network model is significantly improved.

Table 1. Comparison of the effects of merging the BN layer into the convolutional layer (the size of image is 720*128)

| Model | Forward time of GPU (720*1280) | Forward time of GPU (320*320) |
|---|---|---|
| RFCN (before merger) | 92.664ms | 52.7667ms |
| RFCN (after merger) | 79.2753ms | 25.2336ms |
| Improve | 14.5% | 52.2% |

In a fourth preferred embodiment of the method for constructing the dairy cattle nipple detection convolutional neural network model provided by the present disclosure, in the step 104, in the process of constructing the dairy cattle nipple convolutional neural network model based on the dairy cattle images and the corresponding labelled images in the training set, the parameters of the convolutional neural network include Momentum, Decay, Max Iters, learning rate, Steps, and Scales. Define the training parameters in the convolutional neural network as shown in Table 2.

Table 2. Network configuration parameters

| Momentum | Decay | Max Iters | Learning rate | Steps | Scales |
|---|---|---|---|---|---|
| 0.9 | 0.0005 | 100000 | 0.001 | 70000 | 0.1 |

In a fifth preferred embodiment of the method of constructing the dairy cattle nipple detection convolutional neural network model provided by the present disclosure, in the step 108, a process of adjusting the target frame to a preset size based on the labeled image includes that an original network model using 9 anchors of different ratios and scales, such as ratios = [0.5, 1, 2], scales = [128, 256, 512], in this preferred embodiment, the clustering method is not used to determine the size of the anchor, but directly adjusting the ratios and scales to meet the requirements of detecting a small target. The result of modification includes ratios=[0.5, 1, 2], scales= [16, 32, 64, 128, 256].

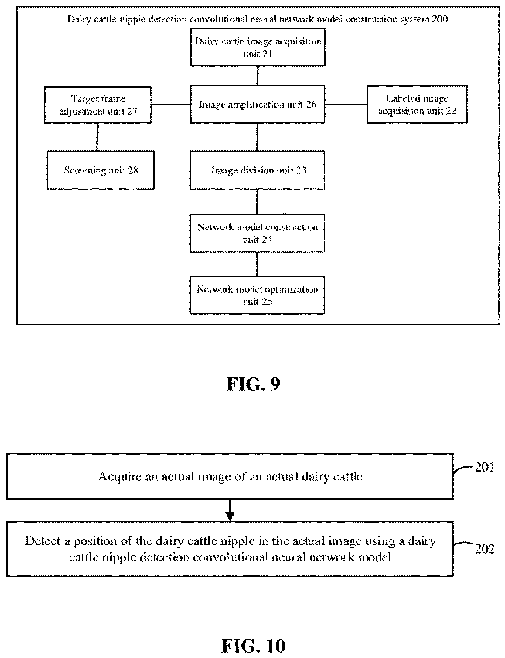

Referring to FIG. 9, according to another aspect of the present disclosure, the present disclosure further provides a dairy cattle nipple detection convolutional neural network model construction system 200. The dairy cattle nipple detection convolutional neural network model construction system 200 includes a dairy cattle image acquisition unit 21, a labeled image acquisition unit 22, an image division unit 23, a network model construction unit 24, and a network model optimization unit 25, wherein the dairy cattle image acquisition unit 21 is used to acquire the dairy cattle images of at least one dairy cattle, wherein the dairy cattle image includes dairy cattle nipples. The labeled image acquisition unit 22 is used to acquire a labeled image corresponding to each of the dairy cattle images, wherein the labeled image includes at least one target frame, and the target frame is used to label a position of the dairy cattle nipple in the dairy cattle image. The image dividing unit 23 is used to divide the dairy cattle images and the corresponding labeled images into a training set, a verification set, and a test set according to a preset proportions, and the network model construction unit 24 is used to construct a dairy cattle nipple detection convolutional neural network model based on the dairy cattle images and the corresponding labeled images in the training set. The network model optimization unit 25 is used to optimize and test the parameters of the dairy cattle nipple detection convolutional neural network model based on the dairy cattle images and the corresponding labeled images in the verification set and the test set.

The dairy cattle image acquisition unit 21 acquires the dairy cattle images by capturing images of the dairy cattle at different angles using an industrial camera. Preferably, the dairy cattle images of the dairy cattle are taken from four directions: front, rear, left, and right in relation to the dairy cattle. Preferably, there are 100 dairy cattle, and the dairy cattle images of the 100 dairy cattles are obtained respectively to increase the diversity of the samples.

The labeled image acquisition unit 22 acquires the labeled image corresponding to each of the dairy cattle images using a labeling tool, by labelling a target frame and categories for each dairy cattle image, wherein the target frame is used to label the position of the dairy cattle nipple in the dairy cattle image, and the categories mainly include scene background, dairy cattle udder, and dairy cattle nipples. The labelled images are saved in xml file.

The image dividing unit 23 is used to divide the dairy cattle images and the corresponding labeled images into the training set, the verification set, and the test set at a proportions of 8:1:1.

The dairy cattle nipple detection convolutional neural network model construction system 200 further includes an image amplification unit 26 for performing amplification processing on the dairy cattle images and the corresponding labeled images for increasing the diversity of the dairy cattle images and the corresponding labeled images. Those skilled in the art should understand that, due to the limitation of the number of acquired dairy cattle images, it is not enough to meet the large data requirements of deep learning. Data amplification technology is used to increase the diversity of the dairy cattle images and the corresponding labeled images. For example, rotation, translation, and folding, etc., while calculating the mean value of the data set, normalizing the color of the data set to remove the influence of uneven illumination, and after performing the amplification process on the dairy cattle images and the corresponding labeled images, dividing the dairy cattle images and the corresponding labeled images into the training set, the verification set, and the test set according to the preset proportions. Those skilled in the art should understand that, in other preferred embodiments of the present disclosure, when the quantity of dairy cattle images is large enough to meet the requirements of the large amount of data required for deep learning, no amplification processing needs to be performed on the dairy cattle images and the corresponding labeled images.

The dairy cattle nipple detection convolutional neural network model construction system 200 further includes a target frame adjustment unit 27 for adjusting the target frame to a preset size based on the labeled image, so that the size of the target frame is suitable to the labeled image. Those skilled in the art should understand that due to the particularity of the dairy cattle image and the corresponding labeled image provided by the present disclosure, the size of the dairy cattle image and the size of the corresponding labeled image need to be adjusted according to actual needs. Specifically, in this preferred embodiment, the K-means clustering algorithm is used to obtain the size of the target frame, and each training sample is assigned to the cluster where the nearest center point is located, 9 anchors and 15 anchors are respectively generated by calculating a distance d between the sample and the cluster center, the formula for calculating d is:d(box, centroid) = 1 - IOU(box, centroid), and the calculation formula of IOU is: IOU = (box ∩ centroid)/ (box ∪ centroid).

In other preferred embodiments of the present disclosure, when the target frame adjustment unit 27 adjusts the size of the target frame, the original network model uses 9 anchors of different ratios and scales, such as ratios = [0.5, 1, 2], scales = [128, 256, 512]. In this preferred embodiment, the clustering method is not used to determine the size of the anchor, but directly adjusts the ratios and scales to meet the requirements of detecting the small target. The result of modification includes ratios=[0.5, 1, 2], scales= [16, 32, 64, 128, 256].

The network model construction unit 24 is used to construct the dairy cattle nipple detection convolutional neural network model based on the dairy cattle images and the corresponding labeled images in the training set. Specifically, networks used here include FasterRCNN and RFCN, and resnet50 is used as a feature extraction network, in which a last fully connected layer is removed. The feature extraction network is a residual convolution structure for extracting image feature information, and then detecting targets by connecting to an RPN network. The size and number of anchors in the network layer are modified according to the size of the target frame determined in block 107, so as to improve the detection accuracy of detecting small targets. Then, the dairy cattle images and the corresponding labeled images in the training set are input into the convolutional neural network, so as to construct the dairy cattle nipple detection convolutional neural network. Specifically, an image resolution of the dairy cattle image input in the network is 720*1280, a parameter file of the resnet50 trained by ImageNet model is downloaded at the same time, a caffe framework is used for training, learning parameters are adjusted according to training results, and finally parameters of the model that meet conditions are obtained.

The network model optimization unit 25 is used to optimize and test the parameters of the dairy cattle nipple detection convolutional neural network model based on the dairy cattle images and the corresponding labeled images in the verification set and the test set. Specifically, the dairy cattle images and the corresponding labeled images in the verification set are used to optimize the parameters of the dairy cattle nipple detection convolutional neural network model, and the dairy cattle images and corresponding labeled images in the test set are used to test the dairy cattle nipple detection convolutional neural network, so as to determine the detection result of the cattle nipple detection convolutional neural network model. In a preferred embodiment of the present disclosure, the result of testing the detection result of the dairy cattle nipple detection convolutional neural network model by using the dairy cattle images and the corresponding labeled images in the test set includes MAP = 0.9046, FPS=12.

In other preferred embodiments of the present disclosure, the dairy cattle nipple detection convolutional neural network model construction system 200 further includes a screening unit 28, and the screening unit 28 is used to remove the detection frame that does not meet a preset condition. For example, the detection frame that is outside the target frame, so as to improve the detection accuracy and avoid false detection of small targets. Finally, the network outputs different categories and corresponding confidences and position information, and obtains the result according to set threshold.

According to another aspect of the present disclosure, the present disclosure further provides a dairy cattle nipple detection convolutional neural network model, which is used to detect the positions of dairy cattle nipples, wherein the construction of the dairy cattle nipple detection convolutional neural network model includes:

101 : Acquiring at least one dairy cattle image of at least one dairy cattle, wherein the dairy cattle image includes dairy cattle nipples;
102: Acquiring a labeled image corresponding to each dairy cattle image, wherein the labeled image includes a target frame, and the target frame is used to label the position of the dairy cattle nipple in the dairy cattle image;
103: Dividing the dairy cattle images and the corresponding labeled images into a training set, a verification set, and a test set according to a preset proportions;
104: Constructing a dairy cattle nipple detection convolutional neural network model based on the dairy cattle images and the corresponding labeled images in the training set; and
105: Optimizing and testing parameters of the dairy cattle nipple detection convolutional neural network model based on the dairy cattle images and the corresponding labeled images in the verification set and the test set.

Referring to FIG. 10, according to another aspect of the present disclosure, the present disclosure further provides a dairy cattle nipple detection method, which includes:

201: Acquiring an actual image of an actual dairy cattle; and
202: Detecting a position of the dairy cattle nipple in the actual image using a dairy cattle nipple detection convolutional neural network model;

Wherein a method for constructing the dairy cattle nipple detection convolutional neural network model includes:

101 : Acquiring at least one dairy cattle image of at least one dairy cattle, wherein the dairy cattle image includes dairy cattle nipples;
102: Acquiring a labeled image corresponding to each dairy cattle image, wherein the labeled image includes a target frame, and the target frame is used to label the position of the dairy cattle nipple in the dairy cattle image;
103: Dividing the dairy cattle images and the corresponding labeled images into a training set, a verification set, and a test set according to a preset proportions;
104: Constructing the dairy cattle nipple detection convolutional neural network model based on the dairy cattle images and the corresponding labeled images in the training set; and
105: Optimizing and testing parameters of the dairy cattle nipple detection convolutional neural network model based on the dairy cattle images and the corresponding labeled images in the verification set and the test set.

In the description of this specification, descriptions with reference to the terms "one embodiment", "some embodiments", "examples", "specific examples", or "some examples" etc. mean specific features described in conjunction with the embodiment or example, structure, materials or features are included in at least one embodiment or example of the present disclosure. In this specification, the schematic representations of the above-mentioned terms do not necessarily refer to the same embodiment or example. Moreover, the described specific features, structures, materials or characteristics can be combined in any one or more embodiments or examples in a suitable manner. In addition, those skilled in the art can combine and combine the different embodiments or examples and the characteristics of the different embodiments or examples described in this specification without contradicting each other.

Those skilled in the art should understand that the above description and the embodiments of the present disclosure shown in the drawings are only examples and do not limit the present disclosure. The purpose of the present disclosure has been completely and effectively achieved. The function and structure principle of the present disclosure have been shown and explained in the embodiments. Without departing from the principle, the implementation of the present disclosure may have any deformation or modification.

**Claims**

1. A method for constructing a dairy cattle nipple detection convolutional neural network model, **characterized in that**, the method comprising following steps:

> 101: acquiring at least one dairy cattle image of at least one dairy cattle, the dairy cattle image comprising dairy cattle nipples;
>
> 102: acquiring a labeled image corresponding to each dairy cattle image, the labeled image comprising at least one target frame, and the target frame being used to labelling a position of the dairy cattle nipple in the dairy cattle image;
>
> 103: dividing the dairy cattle images and the corresponding labeled images into a training set, a verification set, and a test set according to pre-set proportions;
>
> 104: constructing the dairy cattle nipple detection convolutional neural network model based on the dairy cattle images and the corresponding labeled images in the training set; and
>
> 105: optimizing and testing parameters of the dairy cattle nipple detection convolutional neural network model based on the dairy cattle images and the corresponding labeled images in the verification set and the test set.

2. The method for constructing the dairy cattle nipple detection convolutional neural network model according to claim 1, wherein in the step 103, the dairy cattle images and the corresponding labeled images are divided into the training set, the verification set, and the test set at a proportions of 8:1:1.

3. The method for constructing the dairy cattle nipple detection convolutional neural network model according to claim 1, wherein between the step 102 and the step 103, further comprises:
   increasing a diversity of the dairy cattle images and the corresponding labeled images by performing amplification processing on the dairy cattle images and the corresponding labeled images.

4. The method for constructing the dairy cattle nipple detection convolutional neural network model according to claim 1, wherein between the step 103 and said step 104, further comprising:
   adjusting a size of the target frame to a preset size based on the labeled image.

5. The method for constructing the dairy cattle nipple detection convolutional neural network model according to claim 4, comprising:
   adjusting the size of the target frame to the preset size target frame using a K-means clustering algorithm.

6. The method for constructing the dairy cattle nipple detection convolutional neural network model according to claim 1, wherein in step 105, comprises:
   merging parameters of a BatchNorm layer into a convolutional layer when optimizing and testing the parameters of the dairy cattle nipple detection convolutional neural network model.

7. The method for constructing the dairy cattle nipple detection convolutional neural network model according to claim 1, further comprising:
   removing a detection frame that does not meet a preset condition.

8. The method for constructing the dairy cattle nipple detection convolutional neural network model according to claim 2, further comprising:
   removing a detection frame that does not meet a preset condition.

9. The method for constructing the dairy cattle nipple detection convolutional neural network model according to claim 3, further comprising:
   removing a detection frame that does not meet a preset condition.

10. The method for constructing the dairy cattle nipple detection convolutional neural network model according to claim 4, further comprising:
    removing a detection frame that does not meet a preset condition.

11. The method for constructing the dairy cattle nipple detection convolutional neural network model according to claim 6, further comprising:
    removing a detection frame that does not meet a preset condition.

12. A dairy cattle nipple detection convolutional neural network model, which is used to detect a position of a dairy cattle nipple in an image, **characterized in that** the dairy cattle nipple detection convolutional neural network model comprises:

a dairy cattle image acquisition unit for acquiring at least one dairy cattle image of at least one dairy cattle, the dairy cattle image comprising dairy cattle nipples;
a labeled image acquisition unit for acquiring a labeled image corresponding to each dairy cattle image, the labeled image comprising at least one target frame, and the target frame being used to labelling a position of the dairy cattle nipple in the dairy cattle image;
an image dividing unit for dividing the dairy cattle images and the corresponding labeled images into a training set, a verification set, and a test set according to pre-set proportions;
a network model construction unit for constructing the dairy cattle nipple detection convolutional neural network model based on the dairy cattle images and the corresponding labeled images in the training set; and
a network model optimization unit for optimizing and testing parameters of the dairy cattle nipple detection convolutional neural network model based on the dairy cattle images and the corresponding labeled images in the verification set and the test set.

13. The dairy cattle nipple detection convolutional neural network model according to claim 12, wherein the image dividing unit is configured to divide the dairy cattle images and the corresponding labeled images into the training set, the verification set, and the test set at a proportions of 8:1:1.

14. The dairy cattle nipple detection convolutional neural network model according to claim 12, further comprising an image amplification unit for increasing a diversity of the dairy cattle images and the corresponding labeled images by performing amplification processing on the dairy cattle images and the corresponding labeled images.

15. The dairy cattle nipple detection convolutional neural network model according to claim 12, further comprising a target frame adjustment unit, the target frame adjustment unit being configured for adjusting a size of the target frame to a preset size based on the labeled image.

16. The dairy cattle nipple detection convolutional neural network model according to claim 12, further comprising: a screening unit being used to remove a detection frame that does not meet a preset condition.

17. A dairy cattle nipple detection convolutional neural network model, which is used to detect a position of a dairy cattle nipple in a dairy cattle image, **characterized in that** a construction method comprising following steps:

101: acquiring at least one dairy cattle image of at least one dairy cattle, the dairy cattle image comprising dairy cattle nipples;
102: acquiring a labeled image corresponding to each dairy cattle image, the labeled image comprising at least one target frame, and the target frame being used to labelling a position of the dairy cattle nipple in the dairy cattle image;
103: dividing the dairy cattle images and the corresponding labeled images into a training set, a verification set, and a test set according to pre-set proportions;
104: constructing the dairy cattle nipple detection convolutional neural network model based on the dairy cattle images and the corresponding labeled images in the training set; and
105: optimizing and testing parameters of the dairy cattle nipple detection convolutional neural network model based on the dairy cattle images and the corresponding labeled images in the verification set and the test set.

18. A dairy cattle nipple detection method, **characterized in that** the detection method comprise following steps:

201: acquiring an actual image of an actual dairy cattle; and
202: detecting a position of the dairy cattle nipple in the actual image using a dairy cattle nipple detection convolutional neural network model;
wherein a method for constructing the dairy cattle nipple detection convolutional neural network model comprises:

101: acquiring at least one dairy cattle image of at least one dairy cattle, the dairy cattle image comprising dairy cattle nipples;
102: acquiring a labeled image corresponding to each dairy cattle image, the labeled image comprising at least one target frame, and the target frame being used to labelling a position of the dairy cattle nipple in the dairy cattle image;
103: dividing the dairy cattle images and the corresponding labeled images into a training set, a verification set, and a test set according to pre-set proportions;

104: constructing the dairy cattle nipple detection convolutional neural network model based on the dairy cattle images and the corresponding labeled images in the training set; and

105: optimizing and testing parameters of the dairy cattle nipple detection convolutional neural network model based on the dairy cattle images and the corresponding labeled images in the verification set and the test set.

Acquire at least one dairy cattle image of at least one dairy cattle, wherein the dairy cattle image includes dairy cattle nipples — 101

Acquire a labeled image corresponding to each dairy cattle image, wherein the labeled image includes at least one target frame, and the target frame is used to label the position of the dairy cattle nipple in the dairy cattle image — 102

Divide the dairy cattle images and the corresponding labeled images into a training set, a verification set, and a test set according to preset proportions — 103

Construct a dairy cattle nipple detection convolutional neural network model based on the dairy cattle images and the corresponding labeled images in the training set — 104

Optimize and test parameters of the dairy cattle nipple detection convolutional neural network model based on the dairy cattle images and the corresponding labeled images in the verification set and the test set — 105

**FIG. 1**

```
┌─────────────────────────────────────────────────────────┐
│                    Obtain a data set                     │
└─────────────────────────────────────────────────────────┘
                            │
                            ▼
┌─────────────────────────────────────────────────────────┐
│ Use data amplification technology to increase an amount of training data │
└─────────────────────────────────────────────────────────┘
                            │
                            ▼
┌─────────────────────────────────────────────────────────┐
│   Normalize color to remove influence of uneven illumination   │
└─────────────────────────────────────────────────────────┘
                            │
                            ▼
┌─────────────────────────────────────────────────────────┐
│  Obtain a size of an anchor using a K-means clustering algorithm  │
└─────────────────────────────────────────────────────────┘
                            │
                            ▼
┌─────────────────────────────────────────────────────────┐
│            Design a convolutional neural network         │
└─────────────────────────────────────────────────────────┘
                            │
                            ▼
┌─────────────────────────────────────────────────────────┐
│                       Train model                        │
└─────────────────────────────────────────────────────────┘
                            │
                            ▼
┌─────────────────────────────────────────────────────────┐
│ Use screening mechanism, remove a detection frame that does not meet │
│                       a condition                        │
└─────────────────────────────────────────────────────────┘
                            │
                            ▼
┌─────────────────────────────────────────────────────────┐
│                     Verify the model                     │
└─────────────────────────────────────────────────────────┘
```

**FIG. 2**

**FIG. 3**

**FIG. 4**

**FIG. 5**

**FIG. 6**

**FIG. 7**

Acquire at least one dairy cattle image of at least one dairy cattle, wherein the dairy cattle image includes dairy cattle nipples — 101

Acquire a labeled image corresponding to each dairy cattle image, wherein the labeled image includes at least one target frame, and the target frame is used to label the position of the dairy cattle nipple in the dairy cattle image — 102

Divide the dairy cattle images and the corresponding labeled images into a training set, a verification set, and a test set according to preset proportions — 103

Construct a dairy cattle nipple detection convolutional neural network model based on the dairy cattle images and the corresponding labeled images in the training set — 104

Optimize and test parameters of the dairy cattle nipple detection convolutional neural network model based on the dairy cattle images and the corresponding labeled images in the verification set and the test set — 105

Remove a detection frame that does not meet a preset condition — 108

**FIG. 8**

Dairy cattle nipple detection convolutional neural network model construction system 200

Dairy cattle image acquisition unit 21

Target frame adjustment unit 27

Image amplification unit 26

Labeled image acquisition unit 22

Screening unit 28

Image division unit 23

Network model construction unit 24

Network model optimization unit 25

**FIG. 9**

Acquire an actual image of an actual dairy cattle — 201

Detect a position of the dairy cattle nipple in the actual image using a dairy cattle nipple detection convolutional neural network model — 202

**FIG. 10**

## INTERNATIONAL SEARCH REPORT

| | |
|---|---|
| International application No. | |
| | **PCT/CN2019/107857** |

**A. CLASSIFICATION OF SUBJECT MATTER**

G06K 9/00(2006.01)i

According to International Patent Classification (IPC) or to both national classification and IPC

**B. FIELDS SEARCHED**

Minimum documentation searched (classification system followed by classification symbols)

G06K; G06T; A01J; G06N

Documentation searched other than minimum documentation to the extent that such documents are included in the fields searched

Electronic data base consulted during the international search (name of data base and, where practicable, search terms used)

DWPI; EPONPL; VEN; WOTXT; CNABS; CNTXT; IEEE; CNKI: 动物, 牛, 羊, 奶头, 乳房, 挤奶, 农业, 识别, 检测, 神经网络, 卷积, 训练, 深度, 学习, 标注, 标签, 利拉伐/PA, animal, livestock, cow, cattle, goat, sheep, teat, nipple, udder, milk+, agricultural, recognition, detect+, neural, nerve, network, NN, convolutional, CNN, label+, train+, deep, learn+, delaval/PA

**C. DOCUMENTS CONSIDERED TO BE RELEVANT**

| Category* | Citation of document, with indication, where appropriate, of the relevant passages | Relevant to claim No. |
|---|---|---|
| Y | AKANKSHA, R. et al. "Real-Time Teat Detection using Haar Cascade Classifier in Smart Automatic Milking System" *2017 7th IEEE International Conference on Control System, Computing and Engineering (ICCSCE)*, 26 November 2017 (2017-11-26), sections I-III, and figure 1-9 | 1-5, 7-18 |
| Y | CN 108154182 A (HEFEI ABACI SCIENCE & TECH CO., LTD.) 12 June 2018 (2018-06-12) description, paragraphs 24-34, and figures 1-3 | 1-5, 7-18 |
| A | CN 109640636 A (DELAVAL HOLDING AB) 16 April 2019 (2019-04-16) entire document | 1-18 |
| A | CN 104936439 A (AGRICAM AB) 23 September 2015 (2015-09-23) entire document | 1-18 |
| A | US 2014029797 A1 (ERIKSSON, A. et al.) 30 January 2014 (2014-01-30) entire document | 1-18 |

☐ Further documents are listed in the continuation of Box C.　　☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **11 February 2020** | **26 February 2020** |

| Name and mailing address of the ISA/CN | Authorized officer |
|---|---|
| **China National Intellectual Property Administration (ISA/CN)** **No. 6, Xitucheng Road, Jimenqiao Haidian District, Beijing 100088** **China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2019/107857**

| Patent document cited in search report | | | Publication date (day/month/year) | Patent family member(s) | | | Publication date (day/month/year) |
|---|---|---|---|---|---|---|---|
| CN | 108154182 | A | 12 June 2018 | None | | | |
| CN | 109640636 | A | 16 April 2019 | CA | 3034457 | A1 | 01 March 2018 |
| | | | | WO | 2018038673 | A1 | 01 March 2018 |
| | | | | AU | 2017314754 | A1 | 07 February 2019 |
| | | | | US | 2019191658 | A1 | 27 June 2019 |
| | | | | EP | 3503715 | A1 | 03 July 2019 |
| CN | 104936439 | A | 23 September 2015 | MX | 2015006775 | A | 06 August 2015 |
| | | | | NZ | 708197 | A | 31 August 2018 |
| | | | | CN | 104936439 | B | 12 February 2019 |
| | | | | AU | 2013350867 | B2 | 31 August 2017 |
| | | | | EP | 2925121 | A2 | 07 October 2015 |
| | | | | US | 9922242 | B2 | 20 March 2018 |
| | | | | WO | 2014083433 | A2 | 05 June 2014 |
| | | | | AU | 2013350867 | A1 | 04 June 2015 |
| | | | | WO | 2014083433 | A3 | 24 July 2014 |
| | | | | CA | 2892753 | A1 | 05 June 2014 |
| | | | | BR | 112015012761 | A2 | 11 July 2017 |
| | | | | US | 2015302241 | A1 | 22 October 2015 |
| US | 2014029797 | A1 | 30 January 2014 | AU | 2012233689 | A1 | 01 August 2013 |
| | | | | WO | 2012134379 | A1 | 04 October 2012 |
| | | | | GB | 201105136 | D0 | 11 May 2011 |
| | | | | GB | 2489668 | A | 10 October 2012 |

Form PCT/ISA/210 (patent family annex) (January 2015)